# EUROPÄISCHE PATENTSCHRIFT

(11) **EP 2 488 377 B1**
(45) Veröffentlichungstag und Bekanntmachung des Hinweises auf die Patenterteilung: **18.09.2013**
(21) Anmeldenummer: 10778849.9
(22) Anmeldetag: 13.10.2010
(51) Int. Cl.: B60J 5/04

(54) **VERKLEIDUNGSANORDNUNG FÜR EINEN SCHWENKARM EINER KRAFTWAGENTÜR**
LINING ASSEMBLY FOR A PIVOT ARM OF A VEHICLE DOOR
AGENCEMENT D'HABILLAGE POUR UN BRAS PIVOTANT D'UNE PORTE DE VÉHICULE

(30) Priorität: 14.10.2009 DE 102009050064
(43) Veröffentlichungstag der Anmeldung: 22.08.2012
(73) Patentinhaber: DURA Automotive Body & Glass Systems GmbH, 58840 Plettenberg (DE)
(72) Erfinder: BISINGER, Jochen, 73733 Esslingen (DE); KRISTL, Rainer, 73249 Wernau (DE); KREHMKE, Michael, 58840 Plettenberg (DE); ROTTMANN, Ralf, 57489 Drolshagen (DE)
(74) Vertreter: Zinnecker, Armin
(86) Internationale Anmeldenummer: PCT/EP2010/006269
(87) Internationale Veröffentlichungsnummer: WO 2011/045052

(56) Entgegenhaltungen:
- EP-A2- 2 088 021
- DE-A1-102007 035 230
- GB-A- 2 441 333
- US-A1- 2006 267 375

## Beschreibung

Die Erfindung betrifft eine Verkleidungsanordnung für einen Schwenkarm einer Kraftwagentür, insbesondere einer Schwenkschiebetür.

Allgemein bekannt sind Schwenkschiebetüren für Omnibusse, die mittels eines Schwenkarms von einer eine Türöffnung überdeckende Position in eine die Türöffnung freigebende Offenstellung ausstellbar sind. Bei dieser Schwenkschiebetür erfolgt zudem ein Verschieben der Tür entlang einer Seitenwand des Omnibusses zum vollständigen Freigeben der Türöffnung. Neuerdings werden derartige Schwenkschiebetüren auch des Öfteren bei Personenkraftwagen eingesetzt, da hierdurch große Türöffnungen geschaffen werden können, ohne dass- im Unterschied zu üblichen Schwenktüren - beim Öffnen ein übermäßiger Raum zum Bewegen der Tür erforderlich ist.

Der besagte Schwenkarm ist dabei sowohl in der Schließ- und Offenstellung wie auch beim Bewegen der Schwenkschiebetür von den Fahrgästen optisch wahrnehmbar. Da neben dem Schwenkarm auch entsprechende Lagerstellen sowie zusätzliche Kinematikkomponenten vorgesehen sein können, führt dies zu einer Beeinträchtigung des optischen Eindrucks des Innenraums für die Fahrgäste, was insbesondere bei einem Einsatz in Personenkraftwagen oder Omnibussen mit einem sehr hohen Komfort äußerst negativ ist.

Eine Verkleidungsanordnung für einen Schwenkarm einer Kraftwagentür nach dem Oberbegriff des Anspruchs 1 ist aus der EP 2 088 021 A2 bekannt.

Es ist daher Aufgabe der vorliegenden Erfindung, eine Verkleidungsanordnung für einen solchen Schwenkarm bereitzustellen, welche einen sehr guten optischen Eindruck vermittelt.

Diese Aufgabe wird durch eine Verkleidungsanordnung gemäß dem Patentanspruch 1 gelöst. Vorteilhafte Ausgestaltungen mit zweckmäßigen und nicht-trivialen Weiterbildungen der Erfindung sind den abhängigen Ansprüchen angegeben.

Um eine Verkleidungsanordnung mit einem sehr guten optischen Eindruck für einen solchen Schwenkarm bereitzustellen, der einerseits an dem Kraftwagenaufbau und andererseits an der Kraftwagentür gelagert sowie zwischen einer eine Türöffnung überdeckenden Schließstellung und einer die Türöffnung freigebenden Offenstellung ausstellbar ist, umfasst diese zumindest ein Verkleidungselement, mittels welchem der Schwenkarm auf einer der Türöffnung zugewandten Seite zumindest teilweise abdeckbar ist, wobei das Verkleidungselement beim Bewegen der Kraftwagentür zwischen der Schließstellung und der Offenstellung relativ zu dem Schwenkarm bewegbar ist. Erfindungsgemäß ist das Verkleidungselement einerseits auf Seiten der Kraftwagentür um eine Schwenkachse verschwenkbar gehalten.

Die erfindungsgemäße Verkleidungsanordnung ermöglicht somit die Abdeckung des Schwenkarms sowohl in der Schließstellung der Kraftwagentür als auch in ihrer Offenstellung sowie bei ihrer Bewegung zwischen diesen beiden Stellungen, da das Verkleidungselement über eine entsprechende Koppelung mit dem Schwenkarm mitbewegt werden kann. Insbesondere kann dabei erreicht werden, dass auch Lagerstellen sowie zusätzliche Kinematikkomponenten des Schwenkarms in allen Bewegungsstellungen abgedeckt sind. Zudem kann erreicht werden, dass eine Änderung des relativen Abstands zwischen dem Kraftwagenaufbau und der Kraftwagentür auf einfache Weise durch die Bewegung des Verkleidungselements relativ zu dem Schwenkarm kaschiert wird.

Die Abdeckung des Schwenkarms und von dessen Lagerstellen und Kinematikkomponenten verbessert den optischen Eindruck der Kraftwagentür außerdem dadurch, dass das Verkleidungselement formal in eine angrenzende Verkleidung der Kraftwagentür integrierbar ist. Dies bedeutet, dass zwischen der Verkleidung der Tür und dem Verkleidungselement lediglich ein geringfügiger Absatz und/oder eine geringfügige Trennfuge bestehen muss, die von einem Betrachter nicht oder nur kaum wahrnehmbar ist. Das Verkleidungselement kann dabei durch eine entsprechende Anpassung an die Verkleidung der Tür besser in den optischen Gesamteindruck der Kraftwagentür eingliedert werden.

Bei dem Verkleidungselement kann es sich beispielsweise um ein ein- oder mehrteiliges Bauteil handeln, welches den Schwenkarm auf die beschriebene Art und Weise abdeckt um somit den optischen Eindruck der Kraftwagentür als auch den gesamten optischen Eindruck einer Interieurgestaltung des Kraftwagens verbessert.

Zur Realisierung der Relativbewegung zwischen dem Schwenkarm und dem Verkleidungselement ist beispielsweise die türseitige Schwenkachse in einem Abstand zur türseitigen Schwenkachse des Schwenkarms angeordnet. Andererseits ist das Verkleidungselement verschiebbar entlang einer Führungskulisse des Schwenkarms gehalten, die als nutartige Ausnehmung ausgebildet ist. Bei der Bewegung der Kraftwagentür zwischen der Schließstellung und der Offenstellung schwenkt das Verkleidungselement demzufolge um seine türseitige Schwenkachse, während es andererseits geführt durch die Führungskulisse an dem Schwenkarm entlang gleitet und somit diesen vorzugsweise während der gesamten Bewegung der Tür abdeckt.

Zur weiteren vorteilhaften Beeinflussungen des optischen Eindrucks ist beispielsweise vorgesehen, dass das Verkleidungselement den Schwenkarm auch auf einer in Hochrichtung der Kraftwagentür nach oben sowie auf einer in Kraftwagenhochrichtung nach unten weisenden Seite abdeckt. Diese Abdeckung bietet darüber hinaus einen Schutz vor Schmierstoff zur Schmierung entsprechender Lagerstellen des Schwenkarms beziehungsweise des Verkleidungselements.

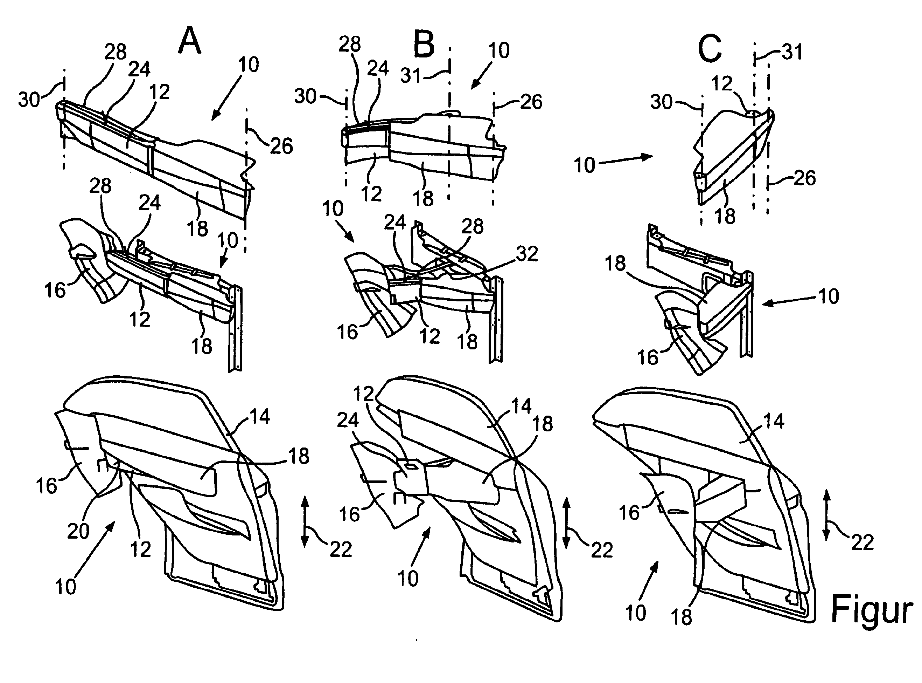

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung Merkmale und Merkmalskombinationen sowie die nachfolgend in der Figurenbeschreibung und/oder in der Figur alleine gezeigten Merkmale und Merkmalskombinationen sind nicht nur in der jeweils angegebenen Kombination, sondern auch in anderen Kombinationen oder in Alleinstellung verwendbar ohne den Rahmen der Erfindung zu verlassen. Dabei zeigt die
- Figur: neun ausschnittsweise perspektivische Ansichten einer Verkleidungsanordnung für einen Schwenkarm einer Schwenkschiebetür, welche mittels eines Schwenkarms zwischen einer die Türöffnung überdeckenden Schließstellung und einer die Türöffnung freigebenden Offenstellung ausstellbar ist, wobei ein Verkleidungselement eine der Türöffnung zugewandte Seite sowie eine in Hochrichtung der Tür nach oben weisende Seite des Schwenkarms abdeckt.

Die Figur zeigt eine Verkleidungsanordnung 10 für einen Schwenkarm 12 einer Schwenkschiebetür 14 eines Kraftwagens, welche mittels des einerseits an dem Kraftwagenaufbau 16 und andererseits an der Kraftwagentür 14 gelagerten Schwenkarms 12 zwischen einer eine Türöffnung überdeckenden Schließstellung und einer die Türöffnung freigebenden Offenstellung ausstellbar ist. Im vorliegenden Ausführungsbeispiel ist die Verkleidungsanordnung 10 für den Schwenkarm 12 bzw. die Schwenkschiebetür 14 einem Kleinbus oder dgl. zugeordnet. Als im Rahmen der Erfindung mit umfasst ist es jedoch zu betrachten, dass die vorliegende die Verkleidungsanordnung 10 für den Schwenkarm 12 bzw. die Schwenkschiebetür 14 auch bei Personenkraftwagen, anderen Transportern oder sonstigen Kraftwagen eingesetzt werden kann. Die vorliegende Schwenkschiebetür 14 dient dabei im vorliegenden Ausführungsbeispiel zum Verschließen einer Türöffnung im Bereich einer Seitenwand des Kraftwagens, und zwar insbesondere als hintere Seitentür. Prinzipiell könnte die Schwenkschiebetür 14 jedoch auch an anderer Stelle positioniert werden.

Diese Bewegung von der Schließstellung in die Offenstellung ist dabei in der Figur spaltenweise durch Spalten A, B und C dargestellt, wobei sich die Schwenkschiebetür 14 gemäß Spalte A in ihre Schließstellung und gemäß Spalte C in ihrer Offenstellung befindet. Gemäß Spalte B befindet sich die Kraftwagentür 14 in einer Zwischenstellung.

Wie der Figur zu entnehmen ist, ist der Schwenkarm 12 an dem Kraftwagenaufbau 16 um eine Schwenkachse 30 und an der Schwenkschiebetür 14 um eine Schwenkachse 31 verschwenkbar gelagert. Zudem ist ein weiterer Arm 32 vorgesehen, welcher in den beiden unteren Darstellung von Spalte B erkennbar ist. Dieser Arm 32 ist ebenfalls einerseits an dem Kraftwagenaufbau 16 und andererseits an der Schwenkschiebetür 14 gelagert. Er bildet mit dem Schwenkarm 12 einen parallelogrammartigen Mechanismus, durch welchen die Schwenkschiebetür 14 beim Öffnen einerseits nach außen ausgestellt und nach hinten verschoben bzw. verlagert wird, und andererseits beim Schließen nach vorne verschoben bzw. verlagert und nach innen eingefahren wird.

Es ist klar, dass anstelle des parallelogrammartigen Mechanismus auch ein anderer Schwenkschiebemechanismus bzw. insgesamt ein anderer Ausstellmechanismus zum Einsatz kommen könnte.

Die Verkleidungsanordnung 10 umfasst nun ein Verkleidungselement 18, mittels welchem der Schwenkarm 12 sowohl auf einer der Türöffnung zugewandten Seite 20 als auch auf einer in Hochrichtung der Schwenkschiebetür 14 gemäß einem Richtungspfeil 22 nach oben weisenden Seite 24 abdeckbar ist. Das Verkleidungselement 18 ist dabei beim Bewegen der Schwenkschiebetür 14 zwischen der Schließstellung und der Offenstellung relativ zu dem Schwenkarm 12 bewegbar.

Diese Bewegbarkeit ist dadurch realisiert, dass das Verkleidungselement 18 auf Seiten der Schwenkschiebetür 14 um eine Schwenkachse 26 verschwenkbar gehalten ist. Andererseits ist das Verkleidungselement 18 entlang einer Führungskulisse 28 des Schwenkarms 12 verschiebbar gehalten. Die Führungskulisse 28 ist als nutartige Ausnehmung in dem Schwenkarm 12 ausgebildet. Die Führung des Verkleidungselements 18 in der Führungskulisse 28 ist derart ausgebildet, dass das Verkleidungselement 18 einen nicht näher erkennbaren Führungszapfen aufweist, welcher mit dem Verkleidungselement 18 verbunden ist und in die Führungskulisse 28 eingreift.

Wie zu sehen ist, wird das Verkleidungselement 18 durch die beschriebene Zwangskopplung mit der Kraftwagentür 14 und dem Schwenkarm 12 einerseits um seine türseitige Schwenkachse 26 verschwenkt und gleitet andererseits geführt durch die Führungskulisse 28 am Schwenkarm 12 entlang. Die türseitige Schwenkachse 26 des Verkleidungselements 18 ist dabei in einem Abstand zu der türseitigen Schwenkachse 31 des Schwenkarms 12 angeordnet. Dies ist insbesondere aus den oberen Darstellungen der Spalten B und C erkennbar. Somit bedarf es keiner gesonderten Antriebsvorrichtung für das Verkleidungselement 18. Vielmehr wird es durch die Kinematik zum Bewegen der Tür infolge der Zwangskopplung angetrieben.

Insbesondere die unterste Zeile der Spalten A, B und C verdeutlicht die formale Integration des Verkleidungselements 18 in eine übrige Verkleidung der Kraftwagentür 14, was einen optischen Eindruck der Kraftwagentür 14 und damit eines gesamten Interieurs des Kraftwagens verbessert.

Des Weiteren ist insbesondere aus der untersten Darstellung der Spalte C erkennbar, dass das Verkleidungselement 18 zumindest im Wesentlichen an den Abstand zwischen der Schwenkschiebetür 14 in ihrer geöffneten Position und der Schwenkachse 30 des Schwenkarms 12 an dem Kraftwagenaufbau 16 angepasst ist.

Der Schwenkarm 12 kann zudem auf Seiten seiner Schwenkachse 30 selbst mit einer festen Verkleidung versehen sind, welche beispielsweise aus einem identischen oder ähnlichen Werkstoff besteht wie das Verkleidungselement 18.

Das Verkleidungselement 18 ist im vorliegenden Fall im Querschnitt winkelförmig oder U-förmig ausgebildet und im Wesentlichen beispielsweise aus Kunststoff hergestellt. Im Bereich des mit der Führungskulisse 28 zusammenwirkenden Führungszapfens bzw. im Bereich der Lagerstellen der Schwenkachse 26 können dabei entsprechende Verstärkungen vorgesehen sein.

## Patentansprüche

1. Verkleidungsanordnung (10) für einen Schwenkarm (12) einer Kraftwagentür (14), insbesondere einer Schwenkschiebetür (14), welche mittels des einerseits an dem Kraftwagenaufbau (16) und andererseits an der Kraftwagentür (14) gelagerten Schwenkarms (12) zwischen einer eine Türöffnung überdeckenden Schließstellung und einer die Türöffnung freigebenden Offenstellung ausstellbar ist, wobei zumindest ein Verkleidungselement (18) vorgesehen ist, mittels welchem der Schwenkarm (12) auf einer der Türöffnung zugewandten Seite (20) zumindest teilweise abdeckbar ist, und wobei das Verkleidungselement (18) beim Bewegen der Kraftwagentür (14) zwischen der Schließstellung und der Offenstellung relativ zu dem Schwenkarm (12) bewegbar ist,
**dadurch gekennzeichnet, dass**
das Verkleidungselement (18) auf Seiten der Kraftwagentür (14) um eine Schwenkachse (26) verschwenkbar gehalten ist.

2. Verkleidungsanordnung (10) nach Anspruch 1,
**dadurch gekennzeichnet, dass**
die türseitige Schwenkachse (26) des Verkleidungselements (18) in einem Abstand zu einer türseitigen Schwenkachse (31) des Schwenkarms (12) angeordnet ist.

3. Verkleidungsanordnung (10) nach einem der vorhergehenden Ansprüche,
**dadurch gekennzeichnet, dass**
das Verkleidungselement (18) verschiebbar am Schwenkarm (12) gehalten ist.

4. Verkleidungsanordnung (10) nach Anspruch 3,
**dadurch gekennzeichnet, dass**
das Verkleidungselement (18) entlang einer Führungskulisse (28) des Schwenkarms (12) verschiebbar gehalten ist.

5. Verkleidungsanordnung (10) nach Anspruch 4,
**dadurch gekennzeichnet, dass**
die Führungskulisse (28) als nutartige Ausnehmung in dem Schwenkarm (12) ausgebildet ist.

6. Kraftwagentür (14), insbesondere Schwenkschiebetür (14), mit einer Verkleidungsanordnung (10) für einen Schwenkarm (12) der Kraftwagentür (14) nach einem der Ansprüche 1 bis 5.

## Claims

1. Covering arrangement (10) for a swivel arm (12) of a motor vehicle door (14), in particular of a swivel arm door (14), which can be switched between a closed position, which covers a door opening, and an open position, which releases the door opening, by means of the swivel arm (12), which is on the one hand mounted on the motor vehicle structure (16) and on the other hand on the motor vehicle door (14), wherein at least one covering element (18) is provided, by means of which the swivel arm (12) can be at least partially covered on a side (20) facing the door opening, and wherein the covering element (18) can be moved during movement of the motor vehicle door (14) between the closed position and the open position relative to the swivel arm (12),
**characterised in that**,
the covering element (18) is held rotatably around an axis of rotation (26) on the side of the motor vehicle door (14)

2. Covering arrangement (10) according to claim 1
**characterised in that**,
the door-side axis of rotation (26) of the covering element (18) is arranged at a distance to the door-side axis of rotation (31) of the swivel arm (12).

3. Covering arrangement (10) according to one of the preceding claims,
**characterised in that**,
the covering element (18) is held displaceably on the swivel arm (12).

4. Covering arrangement (10) according to claim 3,
**characterised in that**,
the covering element (18) is held displaceably along a guiding connecting link (28) of the swivel arm (12).

5. Covering arrangement (10) according to claim 4,
**characterised in that**,
the guiding connecting link (28) is formed as a nublike recess in the swivel arm (12).

6. Motor vehicle door (14), in particular swivel arm door (14), having a covering arrangement (10) for a swivel arm (12) of the motor vehicle door (14) according to one of claims 1 to 5.

## Revendications

1. Agencement d'habillage (10) pour un bras pivotant (12) d'une porte (14) de véhicule automobile, plus particulièrement d'une porte coulissante et pivotante (14), qui est déplaçable, moyennant le bras pivotant (12) articulé d'un côté sur la carrosserie (16) du véhicule et de l'autre côté sur la porte (14) du véhicule, entre une position fermée couvrant le passage de porte et une position ouverte libérant le passage de porte, où il est prévu au moins un cache (18) moyennant lequel le bras pivotant (12) peut être recouvert au moins partiellement du côté en regard du passage de porte, et où le cache (18) est déplaçable par rapport au bras pivotant (12) lors d'un déplacement de la porte (14) du véhicule entre la position fermée et la position ouverte,
**caractérisé en ce que** le cache (18) est monté pivotant, du côté de la porte (14) du véhicule, autour d'un axe de pivotement (26).

2. Agencement d'habillage (10) selon la revendication 1, **caractérisé en ce que** l'axe de pivotement (26) du cache (18) du côté de la porte (14) est espacé d'un axe de pivotement (31), disposé du côté de la porte, du bras pivotant (12).

3. Agencement d'habillage (10) selon l'une des revendications précédentes, **caractérisé en ce que** le cache (18) est monté coulissant au bras pivotant (12).

4. Agencement d'habillage selon la revendication 3, **caractérisé en ce que** le cache (18) est monté coulissant le long d'un rail de guidage (28) du bras pivotant (12).

5. Agencement d'habillage selon la revendication 4, **caractérisé en ce que** le rail de guidage (28) a la forme d'une rainure pratiquée dans le bras pivotant (12).

6. Porte (14) de véhicule automobile, plus particulièrement porte coulissante et pivotante (14), avec un agencement d'habillage (10) pour un bras pivotant (12) de la porte (14) du véhicule selon l'une des revendications 1 à 5.
